# EUROPEAN PATENT APPLICATION

(11) **EP 2 592 113 A1**
(43) Date of publication of application: **15.05.2013**
(21) Application number: 11803416.4
(22) Date of filing: 10.06.2011
(51) Int. Cl.: C08L 23/14, B32B 27/32, C08L 23/16, C09D 123/14, C09J 123/14

(54) **COMPOSITION, LAMINATED STRUCTURE, AND LAMINATED STRUCTURE PRODUCTION METHOD**

(30) Priority: 21.02.2011 JP 2011034210; 05.07.2010 JP 2010152783
(71) Applicant: Sumitomo Chemical Company, Limited, Tokyo 104-8260 (JP)
(72) Inventor: NAGANO, Masashi, Klongton Nua, Wattana Bangkok, 10110 (TH); HIGO, Mutsuko, Toyonaka-shi Osaka 560-0026 (JP)
(74) Representative: Vossius & Partner
(86) International application number: PCT/JP2011/063399
(87) International publication number: WO 2012/005080

(57) **Abstract**

A composition can be provided with superior adhesiveness toward adherends, for example, made of plastic (in particular, polypropylene, and the like). The composition includes the following (A) and (B). (A): Polymer (A-1) having structural units derived from propylene and structural units derived from 1-butene, wherein the content of the structural units derived from propylene is 70-99 mol% based on all the structural units of Polymer (A-1), the content of the structural units derived from 1-butene is 1-30 mol% based on all the structural units of Polymer (A-1), and a melting peak is substantially not observed, or, Polymer (A-2) obtained by modification of Polymer (A-1) with an α,β-unsaturated carboxylic acid, (B): Polymer (B-1) having structural units derived from ethylene and structural units derived from propylene, wherein the content of the structural units derived from ethylene is 5-20 mol% based on all the structural units of Polymer (B-1), the content of the structural units derived from propylene is 80-95 mol% based on all the structural units of Polymer (B-1), and a melting peak is observed, or, Polymer (B-2) obtained by modification of Polymer (B-1) with an α,β-unsaturated carboxylic acid.

## Description

### Technical Field

The present invention relates to a polymer-containing composition, a laminated structure, and a method for manufacturing the laminated structure.

### Background Art

Patent Document 1 describes a polymer-containing composition obtained by modification of a propylene/ 1-butene copolymer with maleic anhydride.

Patent Document 2 describes a polymer-containing composition obtained by modification of an ethylene/propylene copolymer with maleic anhydride.

### Prior art Document

### Patent Document

Patent Document 1: JP2009-1764-A
Patent Document 2: JP2009-287034-A

### Summary of the Invention

### Means for Solving the Problem

The present inventions include the following inventions.
[1] A composition comprising the following (A) and (B);
   (A): Polymer (A-1) which has structural units derived from propylene and structural units derived from 1-butene, wherein the content of the structural units derived from propylene is 70-99 mol% based on all the structural units of Polymer (A-1), the content of the structural units derived from 1-butene is 1-30 mol% based on all the structural units of Polymer (A-1), and in which a melting peak is substantially not observed, or,
      Polymer (A-2) obtained by modification of Polymer (A-1) with an α,β-unsaturated carboxylic acid,
   (B): Polymer (B-1) which has structural units derived from ethylene and structural units derived from propylene, wherein the content of the structural units derived from ethylene is 5-20 mol% based on all the structural units of Polymer (B-1), the content of the structural units derived from propylene is 80-95 mol% based on all the structural units of Polymer (B-1), and in which a melting peak is observed, or,
      Polymer (B-2) obtained by modification of Polymer (B-1) with an α,β-unsaturated carboxylic acid.

[2] The composition as recited in [1] comprising Polymer (A-1).
[3] The composition as recited in [2] wherein the limiting viscosity of Polymer (A-1) is 0.1-10 dl/g.
[4] The composition as recited in any one of [1] to [3], further comprising an organic solvent.
[5] The composition as recited in any one of [1] to [3], further comprising water and an emulsifier.

[6] A laminated structure comprising;
   an adherend and
   an adhesive layer derived from the composition as recited in any one of [1] to [5].
[7] The laminated structure as recited in [6], wherein the adherend is an adherend which is made of a plastic material.
[8] The laminated structure as recited in [7], wherein the plastic material is polyolefin.

[9] A method for manufacturing a laminated structure comprising;
   a first step wherein the composition recited in any one of [1] to [5] is coated onto an adherend to obtain a coated product having the adherend and a layer containing the composition, and,
   a second step wherein the coated product obtained in the first step is dried to obtain a laminated structure having the adherend and a coated film derived from the composition.

### [Effect of the Invention]

According to the present invention, a composition with superior adhesiveness toward an adherend, for example, a plastic (in particular, polypropylene, and the like) can be provided.

### [Mode for carrying out the Invention]

### <Composition>

The composition of the present invention is the abovementioned composition containing (A) and (B).
Hereinafter, Polymer (A-1) and Polymer (A-2) may be generically named "Polymer (A)", and Polymer (B-1) and Polymer (B-2) may be generically named "Polymer (B)".

### <Polymer (A-1)>

Polymer (A-1) is a polymer which has structural units derived from propylene and structural units derived from 1-butene, wherein the content of the structural units derived from propylene is 70-99 mol% based on all the structural units of Polymer (A-1), the content of the structural units derived from 1-butene is 1-30 mol% based on all the structural units of Polymer (A-1), and in which a melting peak is substantially not observed.

The content of the structural units derived from propylene is preferably 71-99 mol%, more preferably 80-99 mol%, still more preferably 90-99 mol% and particularly preferably 95-99 mol% based on all the structural units of Polymer (A-1).
The content of the structural units derived from 1-butene is preferably 1-29 mol%, more preferably 1-20 mol%, still more preferably 1-10 mol% and particularly preferably 1-5 mol% based on all the structural units of Polymer (A-1).

Polymer (A-1) is a polymer in which substantially no melting peak is observed by differential scanning calorimetry (DSC). "Substantially no melting peak is observed" means that within the range of temperature from -100 °C to 200 °C, no crystalline melting peak that has a heat quantity of crystal melting of 1 J/g or higher is observed. More preferably, within the range of temperature from -100 °C to 200 °C, neither crystalline melting peak that has a heat quantity of crystal melting of 1 J/g or higher nor crystallization peak that has a heat quantity of crystallization of 1 J/g or higher is observed.

The limiting viscosity of Polymer (A-1) is preferably 0.1 dl/g or more, more preferably 0.3 dl/g or more, still more preferably 0.5 dl/g or more and particularly preferably 0.7 dl/g or more from the viewpoint of increasing tensile strength and scratch resistance of the composition of the present invention,. Moreover, the limiting viscosity is preferably 10 dl/g or less, more preferably 7 dl/g or less, still more preferably 5 dl/g or less and particularly preferably 4 dl/g or less from the viewpoint of increasing workability during the molding process of the composition of the present invention. The limiting viscosity is measured in tetralin at 135 °C using an Ubbelohde viscometer.

The molecular weight distribution (M_{w}/Mₙ) of Polymer (A-1) is 1-4, and more preferably 1-3 from the viewpoint of reducing the stickiness of the composition of the present invention. The molecular weight distribution is measured with gel permeation chromatography (GPC).

Polymer (A-1) may contain the other structural unit different from the structural unit derived from propylene and the structural unit derived from 1-butene.
Examples of the other structural unit include structural units derived from ethylene, a C₃-C₂₀ straight-chain α-olefin (excluding propylene and 1-butene), a cyclic olefin, a vinyl aromatic compound, and a polyene compound.
When Polymer (A-1) contains the other structural unit, the content thereof is preferably 28 mol% or less, more preferably 19 mol%, and still more preferably 4 mol% based on all the structural units of Polymer (A-1).

Examples of the C₃-C₂₀ straight-chain α-olefin include 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene.

Examples of the cyclic olefin include norbornene, 5-methylnorbornene, 5-ethylnorbornene, 5-propylnorbornene, 5,6-dimethylnorbornene, 1-methylnorbornene, 7-methylnorbornene, 5,5,6-trimethylnorbornene, 5-phenylnorbornene, 5-benzylnorbornene, 5-ethylidenenorbornene, 5-vinylnorbornene, 1,4,5,8-dimethano-1,2,3,4,4a,5,8,8a-octahydronaphthalene, 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydranaphthalene, 2,3-dimethyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2-ethylidene-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 1,5-dimethyl-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, 1,2-dihydrodicyclopentadiene, 5-chloronorbornene, 5,5-dichloronorbornene, 5-fluoronorbornene, 5,5,6-trifluoro-6-trifluoromethylnorbornene, 5-chloromethylnorbornene, 5-methoxynorbornene, 5,6-dicarboxylnorbornene anhydrate, 5-dimethylaminonorbornene, 5-cyanonorbornene, cyclopentene, 3-methylcyclopentene, 4-methylcyclopentene, 3,4-dimethylcyclopentene, 3,5-dimethylcyclopentene, 3-chlorocyclopentene, cyclohexene, 3-methylcyclohexane, 4-methylcyclohexene, 3,4-dimethylcyclohexene, 3-chlorocyclohexene, cycloheptene and vinylcyclohexene.

Examples of the vinyl aromatic compound include styrene, α-methylstyrene, p-methylstyrene, vinyl xylene, monochlorostyrene, dichlorostyrene, monobromostyrene, dibromostyrene, fluorostyrene, p-tert-butylstyrene, ethylstyrene and vinylnaphthalene.

Examples of the polyene compound include a conjugated polyene compound and a non-conjugated polyene compound. Examples of the conjugated polyene compound include an aliphatic conjugated polyene compound such as a linear aliphatic conjugated polyene compound and a branched aliphatic conjugated polyene compound, and an alicyclic conjugated polyene compound; examples of the non-conjugated polyene compound include an aliphatic non-conjugated polyene compound, an alicyclic non-conjugated polyene compound and an aromatic non-conjugated polyene compound. These may have an alkoxy group, an aryl group, an aryloxy group, an aralkyl group, an aralkyloxy group, or the like.

Examples of the aliphatic conjugated polyene compound include 1,3-butadiene, isoprene, 2-ethyl-1,3-butadiene, 2-propyl-1,3-butadiene, 2-isopropyl-1,3-butadiene, 2-hexyl-1,3-butadiene, 2,3-dimethyl-1,3-butadiene, 2,3-diethyl-1,3-butadiene, 2-methyl-1,3-pentadiene, 2-methyl-1,3-hexadiene, 2-methyl-1,3-octadiene, 2-methyl-1,3-decadiene, 2,3-dimethyl-1,3-pentadiene, 2,3-dimethyl-1,3-hexadiene, 2,3-dimethyl-1,3-octadiene and 2,3-dimethyl-1,3-decadiene.

Examples of the alicyclic conjugated polyene compound include 2-methyl-1,3-cyclopentadiene, 2-methyl-1,3-cyclohexadiene, 2,3-dimethyl-1,3-cyclopentadiene, 2,3-dimethyl-1,3-cyclohexadiene, 2-chloro-1,3-butadiene, 2,3-dichloro-1,3-butadiene, 1-fluoro-1,3-butadiene, 2-chloro-1,3-pentadiene, 2-chloro-1,3-cyclopentadiene and 2-chloro-1,3-cyclohexadiene.

Examples of the aliphatic non-conjugated polyene compound include 1,4-hexadiene, 1,5-hexadiene, 1,6-heptadiene, 1,6-octadiene, 1,7-octadiene, 1,8-nonadiene, 1,9-decadiene, 1,13-tetradecadiene, 1,5,9-decatriene, 3-methyl-1,4-hexadiene, 4-methyl-1,4-hexadiene, 5-methyl-1,4-hexadiene, 4-ethyl-1,4-hexadiene, 3-methyl-1,5-hexadiene, 3,3-dimethyl-1,4-hexadiene, 3,4-dimethyl-1,5-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 3-methyl-1,6-heptadiene, 4-methyl-1,6-heptadiene, 4,4-dimethyl-1,6-heptadiene, 4-ethyl-1,6-heptadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 6-methyl-1,6-undecadiene, 9-methyl-1,8-undecadiene, 6,10-dimethyl-1,5,9-undecatriene, 5,9-dimethyl-1,4,8-decatriene, 4-ethylidene-8-methyl-1,7-nonadiene, 13-ethyl-9-methyl-1,9,12-pentadecatriene, 5,9,13-trimethyl-1,4,8,12-tetradecadiene, 8,14,16-trimethyl-1,7,14-hexadecatriene and 4-ethylidene-12-methyl-1,11-pentadecadiene.

Examples of the alicyclic non-conjugated polyene compound include vinylcyclohexene, 5-vinyl-2-norbornene, 5-ethylidene-2-norbornene, 5-methylene-2-norbornene, 5-isopropenyl-2-norbornene, cyclohexadiene, dicyclopentadiene, cyclooctadiene, 2,5-norbornadiene, 2-methyl-2,5-norbornadiene, 2-ethyl-2,5-norbornadiene, 2,3-diisopropylidene-5-norbornene, 2-ethylidene-3-isopropylidene-5-norbornene, 6-chloromethyl-5-isopropenyl-2-norbornene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcyclooctane, 1,5-diallylcyclooctane, 1-allyl-4-isopropenylcyclohexane, 1-isopropenyl-4-vinylcyclohexane, 1-isopropenyl-3-vinylcyclopentane and methyl tetra hydroindene.

Examples of the aromatic non-conjugated polyene compound include divinylbenzene and vinylisopropenybenzene.

While Polymer (A-1) can be manufactured using the known Ziegler-Natta catalysts or the known single-site catalyst (metallocenes, and the like), use of the known single-site catalyst (metallocenes, and the like) in the manufacture is preferable from the viewpoint of improving the heat resistance of the composition of the present invention. Examples of single-site catalysts include the metallocene catalyst described in JP S58-19309-A, JP S60-35005-A, JP S60-35006-A, JP S60-35007-A, JP S60-35008-A, JP S61-130314-A, JP H3-163088-A, JP H4-268307-A, JP H9-12790-A, JP H9-87313-A, JP H11-80233-A and JP H 10-508055-A, and the non-metallocene complex catalyst described in JP H10-316710-A, JP H 11-100394-A, JP H 11-80228-A, JP H 11-80227-A, JP H10-513489-A, JP H 10-338706-A and JP H11-71420-A. Among them, from the viewpoint of being readily available, preferable is the metallocene catalyst, and more preferable is a complex of a transition metal of Groups 3-12 of the Periodic Table with a C1-antipode structure that has at least one cyclopentadienyl type anion skeleton. In addition, examples of a method for manufacturing a polymer using a metallocene catalyst include the method in the specification of EP 1211287-A:

### <Polymer (A-2)>

Polymer (A-2) is a polymer which can be obtained by modification of Polymer (A-1) with an α,β-unsaturated carboxylic acid(s). Polymer (A-2) is a polymer in which a melting peak is substantially not observed by differential scanning calorimetry (DSC).

The amount of the modification with the α,β-unsaturated carboxylic acid(s) is usually 0.1-10 wt%, preferably 0.2-5 wt%, and more preferably 0.2-4 wt% based on 100 wt% for Polymer (A-2) obtained.

When the amount of the modification with the α,β-unsaturated carboxylic acid(s) is 0.1 wt% or more, Polymer (A-2) obtained is easy to handle, and when it is 10 wt% or less, the adhesive strength of the composition obtained tends to be increased, which is preferred.

Examples of the α,β-unsaturated carboxylic acids include an α,β-unsaturated carboxylic acid (maleic acid, itaconic acid, citraconic acid, and the like), an α,β-unsaturated carboxylate ester (maleate methyl, itaconic acid methyl, citraconic acid methyl, and the like), an α,β-unsaturated carboxylic acid anhydride (maleic anhydride, anhydrous itaconic acid, anhydrous citraconic acid, and the like). Also, these α,β-unsaturated carboxylic acids may be used in combination.

The α,β-unsaturated carboxylic acids are preferably the α,β-unsaturated carboxylic acid, and more preferably maleic acid.

Examples of methods for manufacturing Polymer (A-2) include a modification method wherein Polymer (A-1) is melted, and thereafter the α,β-unsaturated carboxylic acid is added thereto, and a modification method wherein Polymer (A-1) is dissolved or suspended in a solvent such as toluene and xylene, and thereafter the α,β-unsaturated carboxylic acid is added thereto.

The modification method wherein Polymer (A-1) is melted, and thereafter the α,β-unsaturated carboxylic acid is added thereto include a method wherein Polymer (A-1), the α,β-unsaturated carboxylic acid and a radical initiator are added in an extruder, either according to a suitably arbitrarily chosen sequence or simultaneously, to carry out melt-kneading. By the melt-kneading using an extruder, various known methods for combining resins, or a resin with the additives of a solid or liquid can adopted, which is preferred. As a furthermore preferable example is a method wherein a homogenous mixture is obtained by mixing all of each of the components or each of the components combined separately using a Henschel mixer, ribbon blender, blender, or the like, after that, the mixture obtained is melt-kneaded. As a melt-kneading means, a conventionally known melt-kneading means such as a Banbury mixer, plast mill, Brabender plastograph, and single-axis or dual-axis extruder can be widely adopted. From the viewpoint of the possibility of continuous production and increased productivity, preferable is a method wherein kneading is carried out by supplying Polymer (A-1), the α,β-unsaturated carboxylic acid and the radical initiator which are thoroughly pre-mixed in advance from the supply port of the extruder using a single-axis or dual-axis extruder.

Additionally, the modification method wherein Polymer (A-1) is dissolved or suspended in a solvent such as toluene and xylene, and thereafter the α,β-unsaturated carboxylic acid is added thereto include a method wherein Polymer (A-1), the α,β-unsaturated carboxylic acid and a radical initiator are added to the solvent, either according to a suitably arbitrarily chosen sequence or simultaneously, to dissolve or suspend Polymer (A-1) in the solvent, whereby modifying with the α,β-unsaturated carboxylic acid under conventional heating.

The used amount of the solvent may be the amount that is capable of dissolving or suspending Polymer (A-1). The used amount of the solvent is usually 0.5-50 parts by mass, preferably approximately 1-30 parts by mass, and depending on the case can be approximately 1-10 parts by mass based on 1 part by mass of Polymer (A-1).

The added amount of the radical initiator is usually 0.1-10 parts by mass, preferably 0.2-5 parts by mass based on 100 parts by mass of Polymer (A-1). When the added amount is 0.1 parts by mass or more, the amount of the modification of Polymer (A-1) is ensured, and the composition of the present invention has a viscosity that is not too high and tends to be easy to handle, when the added amount is 10 parts by mass or less, the amount of the unreacted radical initiator present in Polymer (A-2) obtained is reduced, and the composition of the present invention tends to increase the adhesive strength, which is preferred.

The radical initiator is usually an organic peroxide compound, preferably an organic peroxide compound having a decomposition temperature of 110-160 °C to be a half-life of 1 hour. The decomposition temperature 110 °C or above is preferred because it tends to increase the amount of the modification, and the decomposition temperature 160 °C or below is preferred because it tends to decrease degradation of Polymer (A-1). In addition, these organic peroxide compounds are preferable to have functions of abstracting a proton from Polymer (A-1) after decomposing and generating radicals.

Examples of the organic peroxide compound having a decomposition temperature of 110-160 °C to be a half-life of 1 hour include a diacylperoxide compound, a dialkylperoxide compound, a peroxyketal compound, an alkylperester compound and a percarbonate compound. Examples thereof include dicetyl peroxydicarbonate, di-3-methoxybutyl peroxydicarbonate, di-2-ethylhexyl peroxydicarbonate, bis(4-t-butylcyclohexyl) peroxydicarbonate, diisopropyl peroxydicarbonate, t-butyl peroxyl isopropylcarbonate, dimyristyl peroxycarbonate, 1,1,3,3-tetramethyl butyl neodecanoate, α-cumyl peroxyneodecanoate, t-butyl peroxyneodecanoate, 1,1 bis(t-butyl peroxy)cyclohexane, 2,2 bis(4,4-di-t-butyl peroxycyclohexyl) propane, 1,1-bis(t-butyl peroxy)cyclododecane, t-hexyl peroxyisopropylmonocarbonate, t-butyl peroxy-3,5,5-trimethylhexanoate, t-butyl peroxylaurate, 2,5 dimethyl-2,5-di(benzoylperoxy)hexane, t-butyl peroxyacetate, 2,2'-bis(t-butyl peroxy)butene, t-butyl peroxybenzoate, n-butyl-4,4-bis(t-peroxy)valerate, di-t-butyl peroxyisophthalate, dicumyl peroxide, α-α'-bis(t-butyl peroxy-m-isopropyl)benzene, 2,5-dimethyl-2,5-di(t-butyl peroxy)hexane, 1,3-bis(t-butyl peroxylisopropyl)benzene, t-butyl cumylperoxide, di-t-butyl peroxide, p-menthane hydroperoxide and 2,5-dimethyl-2,5-di(t-butyl peroxy) hexyne-3.

Among such organic peroxide compounds, the peroxide compounds, diacylperoxide compounds, percarbonate compounds and alkyl perester compounds are preferred. The added amount of the organic peroxide compound is usually 0.1-10 parts by mass, preferably 0.2-5 parts by mass based on 100 parts by mass of Polymer (A-1).

The structural units derived from the α,β-unsaturated carboxylic acid(s) contained in Polymer (A-2) obtained can be retained as acid anhydride groups (-CO-O-CO-), or can be in the ring-opened form, or can include both some in retained form and some in ring-opened form.

The weight-average molecular weight of Polymer (A-2) is 30,000 to 200,000, preferably 40,000 to 150,000. If the weight-average molecular weight is 30,000 or higher, suitable adhesive strength can be maintained, and if it is 200,000 or lower, the viscosity is not too high and handling tends to be easier.

The melt flow rate (MFR) value for Polymer (A-2), in compliance with JIS K 7210, measured using a melt indexer (L217-E14011, manufactured by Techno Seven Co., Ltd.) under conditions of 130 °C and 2.16 kgf, is usually 0.1 to 100, preferably 0.5 to 80, and more preferably 1 to 50.

### <Polymer (B-1)>

Polymer (B-1) is a polymer which has structural units derived from ethylene and structural units derived from propylene, wherein the content of the structural units derived from ethylene is 5-20 mol% based on all the structural units of Polymer (B-1), the content of the structural units derived from propylene is 80-95 mol% based on all the structural units of Polymer (B-1), and in which a melting peak is observed.

The content of the structural units derived from ethylene is preferably 5-20 mol%, more preferably 10-19 mol%, still more preferably 11-18 mol% and particularly preferably 11-17 mol% based on all the structural units of Polymer (B-1).
The content of the structural units derived from propylene is preferably 80-95 mol%, more preferably 81-90 mol%, still more preferably 82-89 mol% and particularly preferably 83-89 mol% based on all the structural units of Polymer (B-1).

Polymer (B-1) is a polymer in which a melting peak is observed by differential scanning calorimetry (DSC). "melting peak is observed" means that within the range of temperature from -100 °C to 200 °C, crystalline melting peak that has a heat quantity of crystal melting of 1 J/g or higher is observed. More preferably, within the range of temperature from -100 °C to 200 °C, crystalline melting peak that has a heat quantity of crystal melting of 1 J/g or higher or crystallization peak that has a heat quantity of crystallization of 1 J/g or higher is observed.

The molecular weight distribution (M_{w}/Mₙ) of Polymer (B-1) is 1-4, and more preferably 1-3 from the viewpoint of reducing the stickiness of the composition of the present invention. The molecular weight distribution is measured with gel permeation chromatography (GPC).

Polymer (B-1) may contain the other structural unit that is different from the structural unit derived from ethylene and the structural unit derived from propylene.
Examples of the other structural unit include structural units derived from a C₃-C₂₀ straight-chain α-olefin (excluding ethylene and propylene), a cyclic olefin, a vinyl aromatic compound and a polyene compound. Examples of the C₃-C₂₀ straight-chain α-olefin (excluding propylene), the cyclic olefin, the vinyl aromatic compound and the polyene compound are the same examples described in Polymer (A-1).
When Polymer (B-1) contains the other structural unit, the content thereof is preferably 15 mol% or less, more preferably 9 mol%, and still more preferably 6 mol% based on all the structural units of Polymer (B-1).

While Polymer (B-1) can be manufactured using the known Ziegler-Natta catalysts or the known single-site catalyst (metallocenes, and the like), use of the known single-site catalyst (metallocenes, and the like) in the manufacture is preferable from the viewpoint of improving the heat resistance of the composition of the present invention. Examples of single-site catalysts include the metallocene catalyst described in JP S58-19309-A, JP S60-35005-A, JP S60-35006-A, JP S60-35007-A, JP S60-35008-A, JP S61-130314-A, JP H3-163088-A, JP H4-268307-A, JP H9-12790-A, JP H9-87313-A, JP H11-80233-A and JP H 10-508055-A, and the non-metallocene complex catalyst described in JP H10-316710-A, JP H 11-100394-A, JP H 11-80228-A, JP H 11-80227-A, JP H10-513489-A, JP H 10-338706-A and JP H11-71420-A. Among them, from the viewpoint of being readily available, preferable is the metallocene catalyst, and more preferable is a complex of a transition metal from at least one of titanium, zirconium, hafnium as the transition metal with at least one cyclopentadienyl indenyl skeleton as a ligand. Examples of a method for manufacturing a polymer using a metallocene catalyst include the method in the specification of EP 384264-B.

### <Polymer (B-2)>

Polymer (B-2) is a polymer which can be obtained by modification of the Polymer (B-1) with an α,β-unsaturated carboxylic acid(s). Polymer (B-2) is a polymer in which a melting peak is observed by differential scanning calorimetry (DSC).

The amount of the modification with the α,β-unsaturated carboxylic acid(s) is usually 0.1-10 wt%, preferably 0.2-5 wt%, and more preferably 0.2-4 wt% based on 100 wt% for Polymer (B-2) obtained.

When the amount of the modification with the α,β-unsaturated carboxylic acid(s) is 0.1 wt% or more, Polymer (B-2) obtained is easy to handle, and when it is 10 wt% or less, the adhesive strength of the composition obtained tends to be increased, which is preferred.

Examples of the α,β-unsaturated carboxylic acids include an α,β-unsaturated carboxylic acid (maleic acid, itaconic acid, citraconic acid, and the like), an α,β-unsaturated carboxylate ester (maleate methyl, itaconic acid methyl, citraconic acid methyl, and the like) and an α,β-unsaturated carboxylic acid anhydride (maleic anhydride, anhydrous itaconic acid, anhydrous citraconic acid, and the like). Also, these α,β-unsaturated carboxylic acids may be used in combination.

The α,β-unsaturated carboxylic acids are preferably the α,β-unsaturated carboxylic acid, and more preferably maleic acid.

Examples of methods for manufacturing Polymer (B-2) include a modification method wherein Polymer (B-1) is melted, and thereafter the α,β-unsaturated carboxylic acid is added thereto, and a modification method wherein Polymer (B-1) is dissolved or suspended in a solvent such as toluene and xylene, and thereafter the α,β-unsaturated carboxylic acid is added thereto.

The modification method wherein Polymer (B-1) is melted, and thereafter the α,β-unsaturated carboxylic acid is added thereto include a method wherein Polymer (B-1), the α,β-unsaturated carboxylic acid and a radical initiator are added in an extruder, either according to a suitably arbitrarily chosen sequence or simultaneously, to carry out melt-kneading. By the melt-kneading using an extruder, various known methods for combining resins, or a resin with the additives of a solid or liquid can adopted, which is preferred. As a furthermore preferable example is a method wherein a homogenous mixture is obtained by mixing all of each of the components or each of the components combined separately using a Henschel mixer, ribbon blender, blender, or the like, after that, the mixture is melt-kneaded. As a melt-kneading means, a conventionally known melt-kneading means such as a Banbury mixer, plast mill, Brabender plastograph, and single-axis or dual-axis extruder can be widely adopted. From the viewpoint of the possibility of continuous production and increased productivity, preferable is a method wherein kneading is carried out by supplying Polymer (B-1), the α,β-unsaturated carboxylic acid and the radical initiator which are thoroughly pre-mixed in advance from the supply port of the extruder using a single-axis or dual-axis extruder.

Additionally, the modification method wherein Polymer (B-1) is dissolved or suspended in a solvent such as toluene and xylene, and thereafter the α,β-unsaturated carboxylic acid is added thereto include a method wherein Polymer (B-1), the α,β-unsaturated carboxylic acid and a radical initiator are added to the solvent, either according to a suitably arbitrarily chosen sequence or simultaneously, to dissolve or suspend Polymer (B-1) in the solvent, whereby modifying with the α,β-unsaturated carboxylic acid under conventional heating.

The used amount of the solvent may be the amount that is capable of dissolving or suspending Polymer (B-1). The used amount of the solvent is usually 0.5-50 parts by mass, preferably approximately 1-30 parts by mass, and depending on the case can be approximately 1-10 parts by mass based on 1 part by mass of Polymer (B-1).

The added amount of the radical initiator is usually 0.1-10 parts by mass, preferably 0.2-5 parts by mass based on 100 parts by mass of Polymer (B-1). When the added amount is 0.1 parts by mass or more, the amount of the modification of Polymer (B-1) is ensured, and the composition of the present invention has a viscosity that is not too high and tends to be easy to handle, when the added amount is 10 parts by mass or less, the amount of the unreacted radical initiator present in Polymer (B-2) obtained is reduced, and the composition of the present invention tends to increase the adhesive strength, which is preferred.

The radical initiator is usually an organic peroxide compound, preferably an organic peroxide compound having a decomposition temperature of 110-160 °C to be a half-life of 1 hour. The decomposition temperature 110 °C or above is preferred because it tends to increase the amount of the modification, and a decomposition temperature 160 °C or below is preferred because it tends to decrease degradation of Polymer (B-1). In addition, these organic peroxide compounds are preferable to have functions of abstracting a proton from Polymer (A-1) after decomposing and generating radicals.

Examples of the organic peroxide compound having a decomposition temperature of 50-160 °C to be a half-life of 1 hour include a diacylperoxide compound, a dialkyl peroxide compound, a peroxy ketal compound, an alkyl perester compound and a percarbonate compound. Examples thereof include dicetyl peroxydicarbonate, di-3-methoxybutyl peroxydicarbonate, di-2-ethylhexyl peroxydicarbonate, bis(4-t-butylcyclohexyl) peroxydicarbonate, diisopropyl peroxydicarbonate, t-butyl peroxyl isopropylcarbonate, dimyristyl peroxycarbonate, diisopropyl peroxydicarbonate, 1,1,3,3- tetramethyl butyl neodecanoate, α-cumyl peroxy neodecanoate, t-butyl peroxy neodecanoate, t-butyl peroxyneoheptanoate, 1,1 bis(t-butyl peroxyl) cyclohexane, 2,2 bis(4,4-di-t-butyl peroxycyclohexyl) propane, 1,1- bis(t-butyl peroxy) cyclododecane, t-hexyl peroxy isopropylmonocarbonate, t-butyl peroxy-3,5,5-trimethyl hexanoate, t-butyl peroxylaurate, 2,5 dimethyl-2,5-di(benzoylperoxy) hexane, t-butyl peroxyacetate, 2,2- bis(t-butyl peroxy) butene, t-butyl peroxybenzoate, di(3,5,5-trimethylhexanoyl)peroxide, n-butyl-4,4-bis(t-peroxy) valerate, di-t-butyl peroxyisophthalate, dicumyl peroxide, α-α'-bis(t-butyl peroxyl-m-isopropyl)benzene, 2,5-dimethyl-2,5-di(t-butyl peroxyl)hexane, 1,3- bis(t-butyl peroxyl isopropyl)benzene, t-butyl cumylperoxide, di-t-butylperoxide, p-methane hydroperoxide and 2,5-dimethyl-2,5-di(t-butyl peroxy) hexyne-3.

Among such organic peroxide compounds, preferable ones are the peroxide compounds, diacylperoxide compounds, percarbonate compounds and alkyl perester compounds. The added amount of the organic peroxide compound is usually 0.1-10 parts by mass, preferably 0.2-5 parts by mass based on 100 parts by mass of Polymer (B-1).

The structural units derived from the α,β-unsaturated carboxylic acid(s) contained in Polymer (B-2) obtained can be retained as acid anhydride groups (-CO-O-CO-), or can be in the ring-opened form, or can include both some in retained form and some in ring-opened form.

The weight-average molecular weight of Polymer (B-2) is 10,000 to 150,000, preferably 15,000 to 100,000. If the weight-average molecular weight is 10,000 or higher, suitable adhesive strength can be maintained, and if it is 150,000 or lower, the viscosity will not be too high and handling tends to be easier.

Polymer (A) and the Polymer (B) are mixed together in arbitrary proportions. Based on 100 parts by mass of the composition obtained, preferably 1-99 parts by mass of Polymer (A) and 99-1 parts by mass of Polymer (B) are mixed together, more preferably 5-95 parts by mass of Polymer (A) and 95-5 parts by mass of Polymer (B) are mixed together, and still more preferably 10-90 parts by mass of Polymer (A) and 90-10 parts by mass of Polymer (B) are mixed together.

A first method for manufacturing the composition of the present invention is a method of mixing Polymer (A-1) and/or Polymer (A-2) and Polymer (B-1) and/or Polymer (B-2).
A second method for manufacturing the composition of the present invention is a method of mixing together Polymer (A-1) and Polymer (B-1) and modifying thereof with an α,β-unsaturated carboxylic acid.
The modification is preferably conducted in the presence of a radical initiator.

The composition of the present invention can be used, for example, in bonding adhesives, adhesives, adhesive modifiers, heat-sealants, coatings, coating primers, films, sheets, structural materials, building materials, automobile components, electrical/electronic components and packaging materials and the like. Among them, from the superior adhesiveness, the composition is suitable for use as an adhesive composition in bonding adhesives, adhesives, adhesive modifiers, heat-sealants, coatings, coating primers and the like.

The composition of the present invention may contains an organic solvent such as an aromatic hydrocarbon solvent including toluene, xylene, and the like; an aliphatic hydrocarbon solvent including hexane, and the like; an ester including ethyl acetate, butyl acetate, and the like; a ketone including methyl ethyl ketone, methyl isobutyl ketone, and the like; and an alcohol including methanol, isopropyl alcohol, ethylene glycol, propylene glycol, and the like. These can be used singly, or two or more types can be used in combination.
The content of the solvent in the composition of the present invention is usually 1-30 parts by mass, and preferably 1.5-20 parts by mass based on 1 part by mass of the total of Polymer (A) and Polymer (B).
When the composition of the present invention contains the solvent, all of Polymer (A), Polymer (B) and all of the optional components mentioned below can be dissolved or dispersed in the solvent.

Additionally, the composition of the present invention can, for example, contain water and an emulsifier. The amount of water contained in the composition of the present invention is usually 60-900 parts by mass, and preferably 100-900 parts by mass based on 100 part by mass for the total of Polymer (A) and Polymer (B). By containing water within this range, the composition can be stably maintained along with being able to prevent beading up on the adherend such as polypropylene as mentioned below. The amount of the emulsifier contained in the composition of the present invention is usually 1-30 parts by mass, and preferably 1-25 parts by mass based on 100 part by mass for the total of Polymer (A) and Polymer (B). By containing the emulsifier within this range, the dispersion state of the polymer in water is good, and the adhesive strength of the aqueous dispersion can be increased.

As the emulsifiers, without being limiting in any way, for example, any of a nonionic emulsifier, an anionic emulsifier, a cationic emulsifier and an amphoteric emulsifier can be used.

Examples of emulsification methods include, without being limiting in any particular way, a method of melt-kneading Polymer (A), Polymer (B), water and an emulsifier; a method that involves a heating step wherein Polymer (A) and Polymer (B) are heated, and a mixing step wherein an emulsifier is mixed into the heated Polymer (A) and Polymer (B) obtained in the previous step; a method that involves a heating step wherein Polymer (A) and Polymer (B) are heated, a mixing step wherein an emulsifier is mixed into the heated Polymer (A) and Polymer (B) obtained in the previous step, and a step wherein the mixture obtained in the previous step is dispersed into water; a method that involves a dissolving step wherein Polymer (A) and Polymer (B) are dissolved in an organic solvent such as toluene, a mixing step wherein an emulsifier is mixed into the solution obtained in the previous step, and a removal step wherein the organic solvent is removed from the mixture obtained in the previous step, and that involving furthermore a dispersal step wherein the material obtained at any stage of such steps is dispersed in water.
Moreover, in addition to such mechanical emulsification methods, an aqueous dispersion can be manufactured using chemical emulsification methods such as self-emulsification.

The composition of the present invention can also contain optional components such as stabilizers including a phenolic stabilizer, a phosphate stabilizer, an amine stabilizer, an amide stabilizer, an age resister, a weathering stabilizer, an antisettling agent, an antioxidant, a thermal stabilizers, optical stabilizer, and the like; additives including as a thixotropic agent, a viscosity improver, a dispersing agent, a defoaming agent, a surface adjustment agent, a weathering resister, a pigment, a pigment dispersant, an antistatic agent, a lubricate, a nucleus agent, a flame retarder, an oil agent, a dyestuff, and the like; pigments including a transition metal compound such as titanias (rutile type) and zinc oxide, and carbon black, and the like; inorganic or organic fillers including a glass fiber, a carbon fiber, a titanic acid potassium fiber, a wollastonite, calcium carbonate, calcium sulfate, talc, glass flake, barium sulfate, clay pigeon, china clay, minute powdery silica, mica, calcium silicate, aluminium hydroxide, magnesium hydroxide, aluminum oxide, magnesium oxide, alumina, cerite, and the like.

### <Laminated structure>

The laminated structure of the present invention involves an adherend and an adhesive layer derived from the abovementioned composition.
Examples of adherend include wooden materials such as wood, plywood, medium-density fiberboard (MDF), particleboard and fiberboard; cellulose materials such as cotton cloth, linen cloth and rayon; plastic materials such as polyolefin such as polyethylene (polyolefin wherein the predominant ingredient is structural units derived from ethylene, being the same hereinafter), polypropylene (polyolefin wherein the predominant ingredient is structural units derived from propylene, being the same hereinafter) and polystyrene (polyolefin wherein the predominant ingredient is structural units derived from styrene, being the same hereinafter), polycarbonates, acrylonitrile/butadiene/styrene copolymers (ABS resins), (meth)acrylic resin polyesters, polyethers, poly(vinyl chloride)s, polyurethanes, urethane foams, ethylene/vinyl acetate copolymers (EVA), EVA foams, polyamide resins such as nylon-6and nylon-6,6 and foams thereof; ceramic materials such as glass and ceramic; and metallic materials such as iron, stainless steel, copper and aluminum.

The adherend can also be a composite material made of a plurality of materials. Additionally, the adherend can also be a mix-kneaded product of an inorganic filler such as talc, silica and activated charcoal, a carbon fiber or the like, and a plastic material.

Here, a polyurethane is a polymer cross-linked through urethane bonds, usually obtained by the reaction of an alcohol (-OH) with an isocyanate (-NCO). In addition, an urethane foam is a polyurethan which is foamed with a carbon dioxide generated by the reaction of isocyanate and water used as a cross-linking agent, or a volatile solvent such as Freon. A semi-hardened polyurethane is used for interior upholsteries in automobiles, and a hardened polyurethane is used in coatings.

The adherend made of at least one material selected from the group consisting of wooden materials, cellulose materials, plastic materials, ceramic materials and metallic materials is preferable. Among them, polypropylene, polystyrene, polycarbonate, acrylonitrile/butadiene/styrene copolymer (ABS resin), polyethylene terephthalate, polyvinyl chloride, (meth)acrylic resin, glass, aluminum and polyurethane are preferable, and polyurethane, polyvinyl chloride, glass, aluminum and polyurethane are more preferable.

Examples of methods for manufacturing the laminated structure of the present invention include a method of lamination by co-extrusion molding of the composition of the present invention and the adherend in sheet form; a method of hot-pressing wherein the composition of the present invention in sheet shape and a second adherend are sequentially laminated onto a first adherend; and a manufacturing method that involves a first step wherein the composition of the present invention is coated onto the adherend to obtain a coated product having the adherend and a layer containing the composition, and a second step wherein the coated product obtained in the first step is dried to obtain a laminated structure having the adherend and a coated film derived from the composition.

### Examples

The present invention is described in further detail as shown in the examples below, but the present invention is not limited thereby. In the examples, "parts" and "%" mean based on weight unless stated specifically otherwise.

In the examples below, the physical measurements were carried out by the methods given below.

### (1) Content rate of structural units in polymers

This was calculated on the basis of the measurement results of the ¹H-NMR spectra and the ¹³C-NMR spectra measured using a Bruker AC-250 magnetic resonance spectrometer under the following conditions. Specifically, the composition ratio of the structural units derived from propylene and the structural units derived from 1-butene was calculated from the ratio of the spectral intensity of the methyl carbon in the structural units derived from propylene and the spectral intensity of the methyl carbon in the structural units derived from 1-butene in the ¹³C-NMR spectra, and next the composition ratio of the structural units derived from ethylene, the structural units derived from propylene, and the structural units derived from 1-butene was calculated from the ratio of the spectral intensity of the hydrogens derived from the methine units and the methylene units and the spectral intensity of the hydrogens derived from the methyl units in the ¹H-NMR spectra.
¹³C-NMR (H-decoupling)
¹³C frequency: 150.9 MHz
Pulse width: 6.00 µs
Pulse repeat time: 4.0 s
No. of scans: 256
Measurement temperature: 137 °C
Solvent: o-dichlorobenzene-d₄ (conc: about 20%)

### (2) Limiting viscosity [η]

This was measured at 135 °C using an Ubbelohde viscometer. Tetralin solutions of the polymer were prepared at concentrations c of the polymer per unit volume of tetralin of 0.6, 1.0, and 1.5 mg/ml, and the limiting viscosity was measured at 135 °C. Measurements were repeated three times for each concentration. The average of the three values obtained were set as the specific viscosity (ηₛₚ) values of the concentration, and ηₛₚ/c was extrapolated to c = 0 to determine the limiting viscosity [η].

### (3) Molecular weight distribution

The measurements were carried out with gel permeation chromatograph (GPC) method under the conditions below.
Instrument: Tosoh HLC-8121 GPC/HT
Column: Tosoh TSK gel GMH_{HR}-H(S) HT, 4-column
Temperature: 145 °C
Solvent: o-dichlorobenzene
Eluent flow rate: 1.0 ml/min
Sample concentration: 1 mg/ml
Injection volume for measurement: 300 µl
Molecular weight standard substances: polystyrene standards
Detector: differential refractive index detector

### (4) Crystalline melting peak and crystallization peak

This was measured using a differential scanning calorimeter (Seiko Instruments DSC220C: input compensation DSC) under the following conditions:
(i) The temperature of about 5 mg of a sample was risen at a rate of rising temperature of 30 °C/min from room temperature to 200 °C, and was held for 5 minutes after the rising temperature was completed.
(ii) Next, the temperature of the sample was lowered at a rate of lowing temperature of 10 °C/min from 200 °C to -100 °C, and was held for 5 minutes after the lowing temperature was completed. The peak observed in step (ii) was a crystallization peak, and whether or not the crystallization peak in which the peak area was 1 J/g or more was confirmed.
(iii) Next, the temperature of the sample was risen at a rate of rising temperature of 10 °C/min from -100 °C to 200 °C. The peak observed in step (iii) was a crystalline melting peak, and whether or not the crystalline melting peak in which the peak area was 1 J/g or more was confirmed.

### (5) Melt flow rate (MFR)

The measurement on Polymer (A-2) was carried out according to JIS K 7210 under a load of 2.16 kgf and at a temperature of 130 °C.

### (6) Amount of modification

A 1.0 g sample was dissolved in 20 mL xylene, and the sample was reprecipitated and recovered by adding the sample solution into 300 mL methanol while stirring. Subsequently the recovered sample was dried in vacuo (80 °C, 8 h). A film of 100 µm thickness was prepared by hot pressing, and the infrared absorption spectrum of the obtained film was measured to quantify the amount of the modification by maleic anhydride depending on the absorption in the vicinity of 1780 cm⁻¹.

### <Example of preparation of Polymer (A-1-1)>

A 21 separable flask reactor equipped with stirrer, thermometer, addition funnel, and reflux condenser was evacuated and the gas inside the reactor was replaced with nitrogen. One liter of dried toluene was introduced into this flask as the polymerization solvent. A continuous feed of 8 NL/min propylene and 0.5 NL/min 1-butene at normal pressure was performed at a solvent temperature of 30 °C. To the reactor, 1.25 mmol triisobutylaluminum (referred to below as TIBA) was added and 0.005 mmol dimethylsilyl(2,3,4,5-tetramethylcyclopentadienenyl)(3-tert-butyl-5-methyl-2-phenoxy)titanium dichloride was added as polymerization catalyst. Fifteen seconds later, 0.025 mmol of triphenylmethyl tetrakis(pentafluorophenyl)borate was added to the reactor to initiate the polymerization. Polymerization for 30 minutes resulted in 155.8 g of a propylene/ 1-butene copolymer in which the content of propylene was 96 mol%. The limiting viscosity [η] of the polymer obtained was 2.1 dl/g, and the molecular weight distribution (M_{w}/Mₙ) was 2.5. Moreover, neither crystalline melting peak that has a heat quantity of crystal melting of 1 J/g or higher nor crystallization peak that has a heat quantity of crystallization of 1 J/g or higher was observed within the range of the temperature from -100 °C to 200 °C. This polymer was set as Polymer (A-1-1).

### <Example of preparation of Polymer (A-2-1)>

A 11 separable flask reactor was equipped with stirrer, thermometer, addition funnel, and reflux condenser, and the gas inside the reactor was replaced with nitrogen. To this was added 600 parts xylene as a solvent, 100 parts Polymer (A-1-1), and 15 parts maleic anhydride, and heated to 140 °C with stirring to obtain the solution. Afterwards, 2 parts di-tert-butylperoxide was added, and the reaction was carried out with continuing to stir at the same temperature for 5 hours. An oil bath was used for the heating. After the reaction was complete, the content was lowered to room temperature, then poured into 1000 parts acetone, and the precipitated white solid was collected by filtration. This solid was washed with acetone and dried under reduced pressure to obtain a maleic anhydride-modified polymer. The polymer obtained had an M_{w} of 112,285, an Mₙ of 51,240, a molecular weight distribution (M_{w}/Mₙ) of 2.2, an MFR of 4.2 g/10 min, and the amount of maleic acid modification was 0.50%. This polymer was set as Polymer (A-2-1).

### <Example of preparation of Polymer (A-2-2)>

A 11 separable flask reactor was equipped with stirrer, thermometer, addition funnel, and reflux condenser, and the gas inside the reactor was replaced with nitrogen. To this was added 600 parts xylene as a solvent, 100 parts Polymer (A-1-1), and 50 parts maleic anhydride, 1 part 2,4,8,10-tetra-tert-butyl-6-[3-(3-methyl-4-hydroxy-5-t-butylphenyl)propoxy]di benzo[d,f][1,3,2]dioxaphosphepin (Sumilizer GP, manufactured by Sumitomo Chemical Co., Ltd), and heated to 140 °C with stirring to obtain the solution. Afterward, 2 parts di-tert-butylperoxide was added, and the reaction was carried out with continuing to stir at the same temperature for 5 hours. An oil bath was used for the heating. After the reaction was complete, the content was lowered to room temperature, then poured into 1000 parts acetone, and the precipitated white solid was collected by filtration. This solid was washed with acetone and dried under reduced pressure to obtain a maleic anhydride-modified polymer. The polymer obtained had an M_{w} of 49,043, an Mₙ of 14,267, a molecular weight distribution (M_{w}/Mₙ) of 3.4, and the amount of maleic acid modification was 1.79%. This polymer was set as Polymer (A-2-2).

### <Example of preparation of Polymer (B-2-1)>

Except for using Polymer (B-1-1) [ethylene/ propylene copolymer (Licocene PP 2602, Clariant-Japan, ethylene/propylene = 13 mol%/87 mol%)] instead of Polymer (A-1-1), a maleic anhydride-modified polymer was obtained in the same manner as Example of preparation of Polymer (A-2-1). Polymer (B) obtained had an M_{w} of 55,115, an Mₙ of 25,386, a molecular weight distribution (M_{w}/Mₙ) of 2.2, and the amount of maleic acid modification was 0.84%. This polymer was set as Polymer (B-2-1).
Moreover, crystalline melting peak that has a heat quantity of crystal melting of 1 J/g or higher and crystallization peak that has a heat quantity of crystallization of 1 J/g or higher were observed in Polymer (B-1-1) within the range of temperature from -100 °C to 200 °C.

### <Example of preparation of Polymer (B-2-2)>

Except for using Polymer (B-1-2) [ethylene/propylene copolymer (Licocene PP 1602, Clariant-Japan, ethylene/propylene = 15 mol%/85 mol%)] instead of Polymer (A-1-1), a maleic anhydride-modified polymer was obtained in the same manner as Example of preparation of Polymer (A-2-1). Polymer (B) obtained had an M_{w} of 45,362, an Mₙ of 23,354, a molecular weight distribution (M_{w}/Mₙ) of 1.9, and the amount of maleic acid modification was 0.93%. This polymer was set as Polymer (B-2-2).
Moreover, crystalline melting peak that has a heat quantity of crystal melting of 1 J/g or higher, and a crystallization peak that has a heat quantity of crystallization of 1 J/g or higher were observed in Polymer (B-1-2) within the range of temperature from -100 °C to 200 °C.

### <Example of preparation of a solution containing Polymer (A-1-1)>

Polymer (A-1-1) and methylcyclohexane were mixed to give a concentration of Polymer (A-1-1) of 20 wt%, and to the mixture obtained was admixed 25 parts ethyl acetate based on 100 parts of methylcyclohexane to obtain a solution containing Polymer (A-1-1).

### <Example of preparation of a solution containing Polymer (A-2-1)>

Except for using Polymer (A-2-1) instead of Polymer (A-1-1), a solution containing Polymer (A-2-1) was obtained in the same manner as Example of preparation of a solution containing Polymer (A-1-1).

### <Example of preparation of a solution containing Polymer (A-2-2)>

Except for using Polymer (A-2-2) instead of Polymer (A-1-1), a solution containing Polymer (A-2-2) was obtained in the same manner as Example of preparation of a solution containing Polymer (A-1-1).

### <Example of preparation of a solution containing Polymer (B-1-1)>

Except for using Polymer (B-1-1) instead of Polymer (A-1-1), a solution containing Polymer (B-1-1) was obtained in the same manner as Example of preparation of a solution containing Polymer (A-1-1).

### <Example of preparation of a solution containing Polymer (B-2-1)>

Except for using Polymer (B-2-1) instead of Polymer (A-1-1), a solution containing Polymer (B-2-1) was obtained in the same manner as Example of preparation of a solution containing Polymer (A-1-1).

### <Example of preparation of a solution containing Polymer (B-2-2)>

Except for using Polymer (B-2-2) instead of Polymer (A-1-1), a solution containing Polymer (B-2-2) was obtained in the same manner as Example of preparation of a solution containing Polymer (A-1-1).

### <Example of preparation of an aqueous dispersion 1>

To a 21 separable flask reactor equipped with stirrer, thermometer, and reflux condenser, was added 200 parts toluene as a solvent, 50 parts Polymer (A-2-2), and 50 parts Polymer (B-2-2), and stirred at 80 °C to be dissolved. Next, a mixture of 17 parts LATEMUL E-1000A (Kao Corp.), 5 parts Noigen EA-177 (Daiichi Kogyo Seiyaku Co., Ltd.), and 5 parts isopropanol was added dropwise thereto over 10 minutes. After stirring for an additional 5 minutes, 5 parts dimethyl ethanolamine was introduced, and stirred for another 5 minutes.
Then, substituting a TK ToboMix (Primix Corp.) for the stirrer, and while the reaction mixture obtained was being stirred with a disperser paddle, a mixture of 100 parts isopropanol and 100 parts ion-exchanged water was added dropwise thereto over 30 minutes. Further 300 parts ion-exchanged water was added dropwise thereto to obtain a milky white dispersion.
The dispersion obtained was introduced into a 2L eggplant flask and evaporation was carried out at reduced pressure in an evaporator. The concentrate obtained was filtered through a 200 mesh nylon netting to obtain an aqueous dispersion containing Polymer (A-2-2), Polymer (B-2-2) and an emulsifier. The particle size of the dispersion obtained was 0.3 µm and the solids fraction was 34%.

### <Example of preparation of an aqueous dispersion 2>

Except for using a mixture of 10 parts Jeffamine m-1000 (Mitsui Fine Chemicals) and 5 parts isopropanol as the emulsifier solution, an aqueous dispersion is obtained in the same manner as Example of preparation of an aqueous dispersion 1.

### <Example 1>

A solution containing Polymer (A-2-1) and a solution containing Polymer (B-2-1) were mixed to give Polymer (A-2-1) and Polymer (B-2-1) in a weight ratio of 4:1, and the mixture obtained was stirred for 5 minutes using a three one motor to give a composition containing Polymer (A-2-1) and Polymer (B-2-1). This composition did not undergo phase separation visible to the naked eye and was a homogenous solution.

### <Example 2>

Except for using Polymer (A-2-1) and Polymer (B-2-1) in a weight ratio of 1:1, a composition containing Polymer (A-2-1) and Polymer (B-2-1) was obtained in the same manner as Example 1. This composition did not undergo phase separation visible to the naked eye and was a homogenous solution.

### <Example 3>

Except for using Polymer (A-2-1) and Polymer (B-2-1) in a weight ratio of 1:4, a composition containing Polymer (A-2-1) and Polymer (B-2-1) was obtained in the same manner as Example 1. This composition did not undergo phase separation visible to the naked eye and was a homogenous solution.

### <Example 4>

Except for using Polymer (B-1-1) instead of Polymer (B-2-1), a composition containing Polymer (A-2-1) and Polymer (B-1-1) was obtained in the same manner as Example 1. This composition did not undergo phase separation visible to the naked eye and was a homogenous solution.

### <Example 5>

Except for using Polymer (A-2-1) and Polymer (B-1-1-) in a weight ratio of 1:1, a composition containing Polymer (A-2-1) and Polymer (B-1-1) was obtained in the same manner as Example 4. This composition did not undergo phase separation visible to the naked eye and was a homogenous solution.

### <Example 6>

Except for using Polymer (A-2-2) instead of Polymer (A-2-1), a composition containing Polymer (A-2-2) and Polymer (B-2-1) was obtained in the same manner as Example 2. This composition did not undergo phase separation visible to the naked eye and was a homogenous solution.

### <Example 7>

Except for using Polymer (B-1-1) instead of Polymer (B-2-1), a composition containing Polymer (A-2-2) and Polymer (B-1-1) was obtained in the same manner as Example 6. This composition did not undergo phase separation visible to the naked eye and was a homogenous solution.

### <Example 8>

Except for using Polymer (B-2-2) instead of Polymer (B-2-1), a composition containing Polymer (A-2-2) and Polymer (B-2-2) was obtained in the same manner as Example 6. This composition did not undergo phase separation visible to the naked eye and was a homogenous solution.

### <Example 9>

The aqueous dispersion obtained in Example of preparation of an aqueous dispersion 1 was taken as the composition.

### <Comparative Example 1>

A solution containing Polymer (A-2-1) was taken as the composition.

### <Comparative Example 2>

A solution containing Polymer (B-2-1) was taken as the composition.

### <Test Example 1 >

The compositions obtained in Examples and Comparative Examples were coated onto a polypropylene (PP) plate (3 mm thick) as an application of 10 µm thickness after drying. After drying for 5 minutes at 50 °C in a hot air drier, a 2-component urethane paint was applied by a spray to a film thickness of 100 µm. After the application and maturing for 10 minutes or more at room temperature, a heating treatment was carried out at a predetermined temperature for 30 minutes to obtain the sample.
After the heating treatment and maturing for 3 days or more, the film was cut at 1 cm intervals, and the peel strength of the film was measured using a tensile test apparatus (autograph, Shimadzu) with a peel rate of 50 mm/min and a peel angle of 180 degrees. Table 1 shows the results of carrying out at 50 °C and 60 °C. The units for the numerical values in the table are [N/cm].

**[Table 1]**

| | Polymer | Peel strength (50°C) | Peel strength (60°C) |
|---|---|---|---|
| Example 1 | A-2-1/B-2-1=4/1 | 6.9 | 7.4 |
| Example 2 | A-2-1/B-2-1=1/1 | 8.8 | 10.2 |
| Example 3 | A-2-1/B-2-1=1/4 | 7.1 | 8.0 |
| Example 4 | A-2-1/B-1-1=4/1 | 8.0 | 9.0 |
| Example 5 | A-2-1/B-1-1=1/1 | 8.0 | 8.2 |
| Example 6 | A-2-2/B-2-1=1/1 | 9.0 | 9.4 |
| Example 7 | A-2-2/B-1-1=1/1 | 8.8 | 9.5 |
| Example 8 | A-2-2/B-2-3=1/1 | 7.7 | 8.6 |
| Comp. Ex. 1 | A-2-1 | 5.0 | 5.4 |
| Comp. Ex. 2 | B-2-1 | 4.3 | 5.5 |

### <Test Example 2>

The compositions obtained in Examples were coated onto a PP plate (3 mm thick) as an application of 10 µm thickness after drying. After drying for 5 minutes at 50 °C in a hot air drier, a 2-component urethane paint was applied by a spray to a film thickness of 100 µm. After the application and maturing for 10 minutes or more at room temperature, a heating treatment was carried out at a predetermined temperature for 30 minutes to obtain the sample.
After the heating treatment and maturing for 3 days or more, the film was cut at 1 cm intervals, and the peel strength of the film was measured using a tensile test apparatus (autograph, Shimadzu) with a peel rate of 50 mm/min and a peel angle of 180 degrees. Table 2 shows the results of carrying out at 90 °C and 120 °C. The units for the numerical values in the table are [N/cm].

**[Table 2]**

| | Polymer | Peel strength (90°C. | Peel strength (120°C) |
|---|---|---|---|
| Ex. 1 | A-2-1/B-2-1=4/1 | 9.5 | 10.7 |
| Ex. 2 | A-2-1/B-2-1=1/1 | 11.5 | 13.0 |
| Ex. 3 | A-2-1/B-2-1=1/4 | 12.8 | 11.5 |
| Ex. 4 | A-2-1/B-1-1=4/1 | 10.5 | 11.5 |
| Ex. 5 | A-2-1/B-1-1=1/1 | 12.5 | 13.0 |
| Ex. 6 | A-2-2/B-2-1=1/1 | 14.1 | 12.3 |
| Ex. 7 | A-2-2/B-1-1=1/1 | 11.1 | 12.8 |
| Ex. 8 | A-2-2/B-2-3=1/1 | 10.0 | 11.5 |
| Ex. 9 | A-2-2/B-2-2 /water/emulsifier | 8.5 | 8.7 |

### [Industrial Applicability]

According to the composition of the present invention, a composition can be provided with superior adhesiveness toward adherends, for example, made of plastic (in particular, polypropylene, and the like).

## Claims

1. A composition comprising the following (A) and (B):
(A): Polymer (A-1) which has structural units derived from propylene and structural units derived from 1-butene, wherein the content of the structural units derived from propylene is 70-99 mol% based on all the structural units of Polymer (A-1), the content of the structural units derived from 1-butene is 1-30 mol% based on all the structural units of Polymer (A-1), and in which a melting peak is substantially not observed, or,
Polymer (A-2) obtained by modification of Polymer (A-1) with an α,β-unsaturated carboxylic acid,
(B): Polymer (B-1) which has structural units derived from ethylene and structural units derived from propylene, wherein the content of the structural units derived from ethylene is 5-20 mol% based on all the structural units of Polymer (B-1), the content of the structural units derived from propylene is 80-95 mol% based on all the structural units of Polymer (B-1), and in which a melting peak is observed, or,
Polymer (B-2) obtained by modification of Polymer (B-1) with an α,β-unsaturated carboxylic acid.

2. The composition as recited in Claim 1 comprising Polymer (A-1).

3. The composition as recited in Claim 2 wherein the limiting viscosity of Polymer (A-1) is 0.1-10 dl/g.

4. The composition as recited in any one of Claims 1 to 3, further comprising an organic solvent.

5. The composition as recited in any one of Claims 1 to 3, further comprising water and an emulsifier.

6. A laminated structure comprising;
an adherend and
an adhesive layer derived from the composition as recited in any one of Claims 1 to 5.

7. The laminated structure as recited in Claim 6, wherein the adherend is an adherend which is made of a plastic material.

8. The laminated structure as recited in Claim 7, wherein the plastic material is polyolefin.

9. A method for manufacturing a laminated structure comprising;
a first step wherein the composition recited in any one of Claims 1 to 5 is coated onto an adherend to obtain a coated product having the adherend and a layer containing the composition, and,
a second step wherein the coated product obtained in the first step is dried to obtain a laminated structure having the adherend and a coated film derived from the composition.
